# EUROPEAN PATENT APPLICATION

(11) **EP 2 158 824 A1**
(43) Date of publication of application: **03.03.2010**
(21) Application number: 09167962.1
(22) Date of filing: 17.08.2009
(51) Int. Cl.: A47C 17/80, A47C 17/84, A47C 19/00, B60P 3/39

(54) **Furniture supporting structure, in particular for beds of campers or the like**

(30) Priority: 25.08.2008 IT PI20080079
(71) Applicant: ST.LA.Srl, 56025 Pontedera (PI) (IT)
(72) Inventor: Zappolini, Stefano, 56020, Monopoli V.A. (PI) (IT)
(74) Representative: Gritschneder, Martin

(57) **Abstract**

A supporting and driving mechanism for beds (L) or other furniture, in campers or similar vehicles comprises at least two supporting and driving devices (10) laying in parallel planes and bound at one end to a steady main structure of the vehicle and at the other end to the bed (L) or furniture, in which each of said devices (10) comprises at least two first bars hinged to fixed fastening means, at least two further bars hinged to said first bars and to the bed (L) or other furniture, linking means apt to set a connection between the angles of rotation of said bars in order to define a path for the movement of the points of connection of the devices to the bed (L) or other furniture.

The supporting mechanism (10) of the invention is very simple and cheap and it allows to move the bed (L) vertically or according to the desired paths which can be function of the room available inside campers or similar vehicles.

## Description

### TECHNICAL FIELD

The present invention concerns a supporting and driving structure for beds and other furniture, intended in particular for being used in campers or similar vehicles.

### STATE OF THE ART

In the sector of motorhomes, caravans or in the nautical sector are known supporting and driving structure, in particular for beds, apt to keep it in a lifted position where they do not occupy the vehicle's internal room when they are not used and able to be moved downwards and rest at a usage level. In particular, a first kind of supporting and driving structure comprises at least four oscillating arms, two at each side of the bed, rotating between a substantially horizontal position in which is the bed is kept close to the ceiling of the vehicle and a substantially vertical position in which the bed is down at a usage level. The arms rotate keeping mutually parallel and this way the bed is kept in a horizontal position during movement. Such supporting structure is very simple but it needs a very large amount of free room to perform the movement and room is not always available in the interior of campers or similar vehicles.

A second kind of structure comprises articulated parallelograms or scissor-like mechanisms in various arrangements allowing the bed to go vertically downwards from a lifted non-use position to a bottom in-use position. Such structures use less room during their movement but they have a complex structure and are not reliable at keeping the bed in a steady horizontal position. Due to the above drawbacks of the known art is strongly felt in the motorhomes and caravans sector the need of simple and cheap structures that at the same time are reliable and use little room to move beds or other furniture.

### SUMMARY OF THE INVENTION

Object of the present invention is to propose a supporting and driving structure for beds or other furniture in campers or similar vehicles able to minimize the room required to perform the prescribed movement.

Further object of the invention is to propose a simple, safe and reliable supporting and driving structure.

The above object are attained through a supporting and driving mechanism for beds or different furniture, in particular in campers or other vehicles comprising at least two supporting and driving devices laying in parallel planes and apt to be bound at one end to a steady structure and at the opposite end to the ends of said bed thereof, each of said device comprising at least two first bars pivoting about fixed hinge means and connected each other by first linking means apt to set a connection between the angles of rotation of said first bars about the fixed hinge means thereof; at least two further bars pivoting about hinge means linking them to the first bar thereof, said further bars being further connected to the ends of said bed or furniture; and constraining means apt to set a connection between the angle of rotation of said first bars about their fixed hinge means and the angle of rotation of said further bars about the respective hinge means linking them to said first bars.

Advantageously the connection between said angles of rotation is such that the points of connection of said further bars with said bed or furniture move along substantially straight lines, in particular substantially vertical lines.

Preferably the constraining means apt to set a connection between the angle of rotation of said first bars about their fixed hinge means and the angle of rotation of said further bars about the respective hinge means linking them to said first bars comprise second linking means composed of a bar hinged at one end to said further bar and hinged at its opposite end to said further bar, said bar being apt to set a connection between the angles of rotation of said further bars about their respective hinge means; and third linking means composed of a bar hinged at one end to one of said further bars and hinged at its opposite end to the first bar to which is hinged the other further bar.

The above connection between the angles of rotation of the first bars about their fixed hinge means and the angles of rotation of the further bars about their hinge means connecting them to the first bars is defined by properly dimensioning said first bars, and by properly arranging their hinge means.

Preferably the first linking means are dimensioned and bound so that they keep said first bars parallel each other and said second linking means are dimensioned and bound so that they keep said further bars parallel each other.

Advantageously each of said supporting and driving mechanism comprises elastic means apt to promote and make easier the movement, said elastic means being preferably composed of gas cylinder springs acting between a fixed portion of the vehicle or a fixed portion of said mechanism and said first linking means.

The advantages of the mechanism of the invention are clear with regards to the simplicity of the mechanism together with its effectiveness and reliability at performing the prescribed movement.

### BRIEF DESCRIPTION OF DRAWINGS

However, for a better understanding of the advantages and characteristics of the present invention, this will now be described by way of an embodiment example, with reference to the accompanying drawings, in which:
- figure 1 shows a perspective view of a bed supported and driven by a mechanism according to the invention;
- figure 2 shows a front view of supporting and driving mechanism according to the invention in a open configuration;
- figure 3 shows a front view of the mechanism of fig.2 in a closed configuration;
- figure 4 shows a scheme of the planar kinematic mechanism representing the way of working of the mechanism of fig.2.

### DESCRIPTION OF PREFERRED EMBODIMENTS

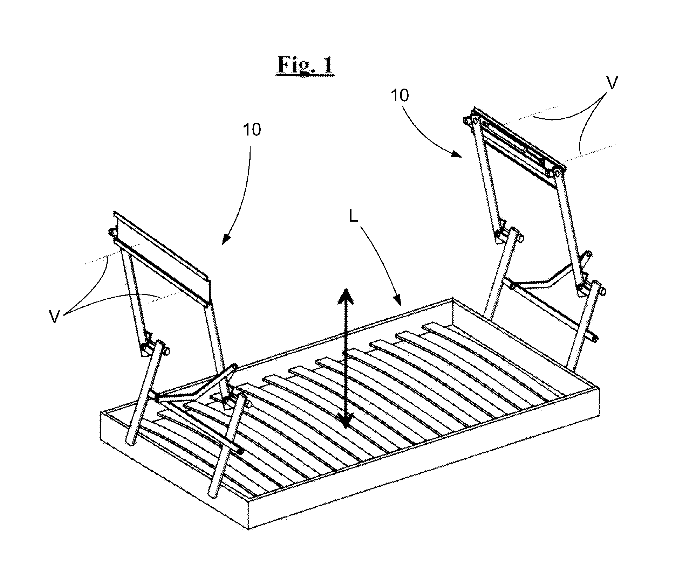

In fig.1 is shown a bed, L, bound at two opposite ends to supporting and driving mechanisms, 10, bound by fastening means, V, to the vehicle's main body. The mechanisms 10 are composed of structural members forming planar kinematic mechanisms by which the bed can be translated from the configuration of fig.1, corresponding to an open mechanism configuration when the bed is used, towards a closed mechanism configuration in which the bed is lofted so that it occupies little room inside the camper or similar vehicle where it is housed.

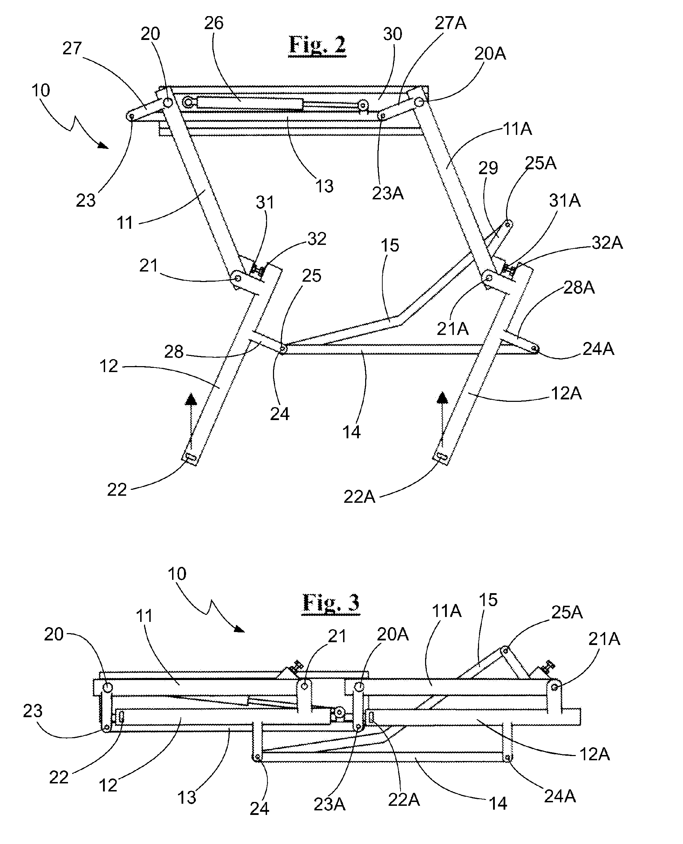

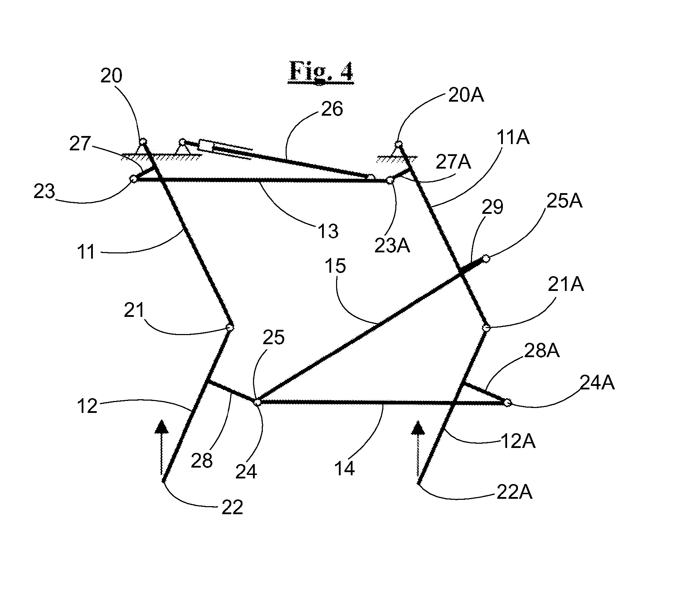

Referring to figs. 2 to 4 the mechanism 10 comprises a resting plate, 30, for binding through the fastening means V, not shown in that figures, the mechanism to a main body of the vehicle, two first bars, 11, 11A, being hinged at one end, by hinge means, 20, 20A, to the resting plate at a certain distance one from the other.

At the other ends of the bars 11 and 11A are hinged by respective hinge means 21, 21 A, the ends of two further bars 12, 12A.

At the other ends of the bars 12 and 12A there are the points of connection, 22, 22A, of the mechanism 10 to the bed L.

As it is clear the composition of the revolution of the bar 11 about the hinge means 20 and of the revolution of the bar 12 about the hinge means 21 define the path of the bed's point of connection 22.

Similarly the composition of the revolution of the bar 11A about the hinge means 20 and of the revolution of the bar 12A about the hinge means 21 define the path of the bed's point of connection 22A.

In the following are described further means connecting the above bars to set a connection between their movements so that the beds points of connection 22 and 22A perform the desired paths.

In the embodiment of fig.2 first linking means composed of a bar 13 are hinged by hinge means, 23, 23A, to protruding members 27, 27A, of the bars 11 and 11A so setting a connection between the movements of the bar 11 with the movements of the bar 11A. Specifically, as the size and arrangement of the protruding members 27 and 27A is identical the first bars 11 and 11A are kept parallel while they rotate.

Similarly, second linking means composed of the bar 14 are hinged by hinge means 24, 24A, to protruding members 28, 28A, of the bars 12 and 12A so setting a connection between the movements of the bar 12 with the movements of the bar 12A. Specifically, as the size and arrangement of the protruding members 28 and 28A is identical and also due to the fact that the first bars 11 and 11A remain parallel each other, the bars 12 and 12A as well remain parallel each other during their rotation.

Third linking means are composed of a shaped bar, 15, hinged by hinge means, 25, 25A, to protruding members 28, 29, respectively integral to the bar 12 and the bar 11A. The third linking means 15 set a connection between the rotation of the bar 11 A and the movement of the bar 12, specifically by constraining a point of the bar 12 that is the hinge means 25 to rotate around a point of the bar 11A that is the hinge means 25A.

It has to be noticed that the overall room occupied by the mechanism 10 in the direction perpendicular to the plane of motion of the mechanism is very little and that is why the bar 15 has to be properly shaped to avoid collisions with other parts of the mechanism, in particular in the closed configuration, as shown in fig.3.

Thanks to the above described kinematic mechanism the path of the bed's points of connection 22 and 22A are the result of the positioning of the hinge means 20, 20A, 21, 21A, 22, 22A, 23, 23A, 24, 24A, 25 and 25A which link together as above described the bars 11, 11 A, 12, 12A, 13, 14 and 15.

In particular, in the above described and shown embodiment the length and shape of the bars 11, 11A, 12, 12A, 13, 14 and 15, and the arrangement of the hinge means 20, 20A, 21, 21A, 22, 22A, 23, 23A, 24, 24A, 25 and 25A is advantageously chosen so that the points of connection 22 and 22A move parallel each other according to substantially linear vertical paths from the position shown in fig.2 to the position shown in fig.3 and vice versa, so allowing a substantially vertical translation of the bed L from the in-use position to the non-use position and vice versa.

End of stroke means 31 of the bar 11 work with and of stroke means 32 of the bar 12 in order to define the maximum open position of the mechanism. Similarly, end of stroke means 31A of the bar 11A work with end of stroke means 32A of the bar 12A.

The mechanism is completed by a gas cylinder spring 26, hinged between the resting plate 30 and the first linking means 13, and allowing keeping the bed in the non-use position and make easier to move the bed between the two opposite end positions.

From what above described it is clear that the supporting and driving mechanism is very efficient because through a simple and cheap structure a substantially straight movement of the bed or furniture supported can be performed. Obviously this kind of movement is particularly useful in campers or similar vehicles where the interior room is very small.

The above advantages in the specific field remain also in case of changes or modifications to what above disclosed as a mere exemplifying embodiment.

The path of the points of connection 22 and 22A can be modified by acting on the position of the hinge means 20, 20A, 21, 21A, 22, 22A, 23, 23A, 24, 24A, 25 and 25A which link each other in the above described manner the bars 11, 11A, 12, 12A, 13, 14 and 15 and different paths, useful for specific applications, can be obtained.

Such paths can be also obtained by replacing the bars 11, 11A, 12, 12A, 13, 14 and 15 with structural elements having a different shape or even by replacing the linking means 13, 14, 15 and their binding means 23, 23A, 24, 24A, 25 and 25A with binding and linking means which are kinematically equivalent.

In particular in the described embodiment the hinge means 24 and 25 are coincident but that is not needed and is due only to a choice of design aiming to simplify the mechanism. In a similar way, different ones of the hinge means of the mechanism could be coincident.

The gas cylinder spring 26 could be removed or replaced with a different type of elastic means, damped or not, and it could be bound to the supporting and driving mechanism of the invention in a different way.

The supporting and driving mechanism could be motorized, for instance by an electric motor apt to rotate one of the first bars 11 or 11A about the hinge means 20 or 20A, so that the movement of the bed L from the in-use position to the non-use position and vice versa takes place without a direct human effort.

The above and further changes could be carried out to the supporting and driving mechanism of the invention always keeping safe the above pointed out advantages, and remaining within the ambit of protection provided by the following claims

In fact, the above description of a specific embodiment is useful to disclose the main concept of the invention, so that people skilled in the sector are able to put it into practice adjusting it according to the specific applications; such adjustment are then to be considered as equivalent of the disclosed embodiment. Finally it is obvious that the wording and numbers used are only useful to explain the inventive concept and they are not limiting.

## Claims

1. Supporting and driving mechanism for beds or different furniture, in particular in campers or other vehicles comprising at least two supporting and driving devices laying in parallel planes and apt to be bound at one end to a steady structure and at the opposite end to the ends of said bed thereof, each of said device comprising at least two first bars (11, 11A) pivoting about fixed hinge means (20, 20A) and connected each other by first linking means (13) apt to set a connection between the angles of rotation of said first bars (11, 11A) about said hinge means (20, 20A) **characterized in that** each of said devices comprises at least two further bars (12, 12A) pivoting about hinge means (21, 21A) linking them to said first bars (11, 11A), said further bars (12, 12A) being further connected to the ends of said bed or furniture; and constraining means apt to set a connection between the angle of rotation of said first bars (11, 11A) about their fixed hinge means (20, 20A) and the angle of rotation of said further bars (12, 12A) about the respective hinge means (21, 21A) linking them to said first bars (11, 11A).

2. Supporting and driving mechanism according to claim 1 **characterized in that** said connection between said angles of rotation is such that the points of connection (22, 22A) of said further bars (12, 12A) with said bed or furniture move along substantially straight lines, in particular substantially vertical lines.

3. Supporting and driving mechanism according to claim 1 or 2 **characterized in that** said constraining means comprise second linking means (14) apt to set a connection between the angles of rotation of said further bars (12, 12A) about their respective hinge means (21, 21A) and third linking means (15) apt to connect said first bar (11 A) to said further bar (12).

4. Supporting and driving mechanism according to the previous claim **characterized in that** said second linking means are composed of a bar (14) hinged at one end, by hinge means (24), to said further bar (12) and hinged at its opposite end, by on more hinge means (24A), to said further bar (12A), said third linking means being composed of a bar (15) hinged at on end, by hinge means (25), to said further bar (12) and hinged at its opposite end, by one more hinge means (25A), to said first bar (11A).

5. Supporting and driving mechanism according to claim 3 or 4 **characterized in that** said connection between said angles is defined by a properly dimensioning said bars (11, 11A, 12, 12A, 13, 14, 15) and by properly arranging their hinge means (21, 21A, 23, 23A, 24, 24A, 25, 25A).

6. Supporting and driving mechanism according to claim 3 or followings **characterized in that** said first linking means (13) keep said first bars (11, 11A) parallel each other and said second linking means (14) keep said further bars (12, 12A) parallel each other.

7. Supporting and driving mechanism according to one of the previous claims **characterized in that** it comprises elastic means acting between a steady portion and at least one of said bars or linking means (11, 11A, 12, 12A, 13, 14, 15).

8. Supporting and driving mechanism according to the previous claim **characterized in that** said elastic means are composed of a gas cylinder spring (26) acting between a plate (30) resting said supporting and driving device to a steady structure and said first linking means (13).

9. Supporting and driving mechanism according to one of the previous claims **characterized in that** it comprises at least one electric motor apt to rotate said first bar (11) about said steady hinge means (20).
